# EUROPEAN PATENT SPECIFICATION

(11) **EP 0 723 899 B1**
(45) Date of publication and mention of the grant of the patent: **21.06.2000**
(21) Application number: 95200162.6
(22) Date of filing: 24.01.1995
(51) Int. Cl.: B60S 1/38

(54) **Windshield wiper**
Scheibenwischer
Essuie-glace

(43) Date of publication of application: 31.07.1996
(73) Proprietor: COOPER AUTOMOTIVE S.A., 6790 Aubange (BE)
(72) Inventor: Boland, Xavier, B-6700 Arlon (BE)
(74) Representative: Hooiveld, Arjen Jan Winfried

(56) References cited:
- EP-A- 0 398 376
- EP-A- 0 565 443
- GB-A- 2 278 270
- US-A- 5 283 925

## Description

### INTRODUCTION TO THE DESCRIPTION

The present invention refers to a windshield wiper comprising an oscillating arm, a frame connected thereto for receiving a wiper blade, as well as comprising an air deflector (spoiler), to the air deflector as such, and to a process for applying the air deflector on the windshield wiper.

Such a windshield wiper is known from US patent publication US-A-4,741,071 (SWF Auto-Electric GmbH).

Wipers actually employed on cars equipped with curved or cambered windscreens are generally formed by a frame with a U-profile which open side is turned towards the windscreen. The wipers are sometimes subjected at high speeds to a lifting effect which prevents a correct wiping of the windscreen. This lifting effect is due to the following aerodynamic phenomenon. Streams of air passing around the car tend to escape vertically upwards in the axis of the car. However, near the sides of the curved windscreen, the streams of air tend to pass horizontally around the sides. These streams of air create, mainly in the zones in which the wiper meets them perpendicularly, a reduced pressure above the wiper and an increased pressure between the windscreen and the wiper. This increase in pressure is further increased by the U-shape of the frame and its orientation towards the windscreen. The resulting pressure, in spite of the mechanical pressure applied by the arm of the wiper, causes the latter to lift away towards the front of the windscreen, thereby deteriorating the wiping pattern at higher driving speeds.

In order to obviate the above-mentioned lifting of the wiper, US patent publication US-A-4,741,071 proposes an air deflector integrated in the main yoke of the frame of the windshield wiper. The integrated air deflector is constructed so as to cause an increase in pressure above the wiper and a decrease in pressure beneath the wiper, in order to press the latter against the windscreen.

A disadvantage of the windshield wiper according to the US patent publication referred to above is that, due to the fact that every car has its own specific aerodynamic particulars, for each type of car a specific windshield wiper with an integrated air deflector has to be designed and manufactured. Obviously this needs complex machinery, tools, with all the expenses involved.

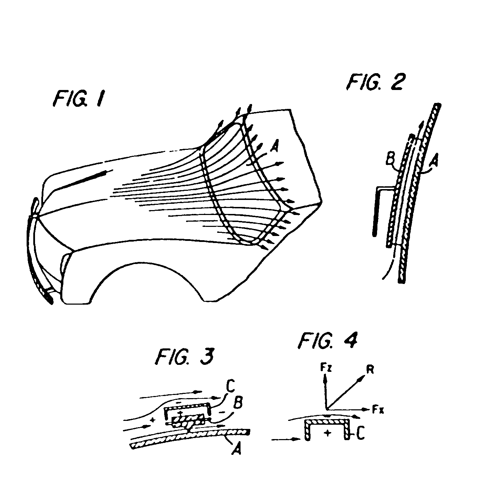

European patent publication EP-A-0 565 443 (Valeo) discloses a windshield wiper comprising an oscillating arm, a frame connected thereto for receiving a wiper blade, as well as with an air deflector, wherein the wiper is provided with main fixation means substantially formed by sliding means for attaching the air deflector to the frame, leaving open an adjustment of the air deflector to its final position substantially perpendicular to the wiping plane, and with auxiliary fixation means for fixating the air deflector in the said final position. However, this prior art reference refers to an apparently statically overdetermined construction in the sense that in practice due to mass production tolerances pin 250 will be locked in groove 161 with play (see figure 4 thereof).

It is an object of the invention to obviate this disadvantage, in the sense that at minimum cost-without using complex machinery and additional tools-air deflectors with mutually minimum modifications are proposed, which can be mounted without any play on all windshield wipers of different cars. It is noted that the present invention is not restricted to cars, but also refers to rail coaches and all other (fast) vehicles.

Thereto, according to the present invention a windshield wiper mentioned in the preamble is characterized in that the auxiliary fixation means are formed either by a protrusion on the air deflector and a hole on the frame/arm or by a hole on the air deflector and a protrusion on the frame/arm. This enables to mount air deflectors mutually only differing in the sense that only the auxiliary fixation means thereon are modified by using a small modification in the respective mould, on every type of windshield wiper of all cars. Moreover, the present air deflector is accurately secured to the frame and/or arm without any play. It is to be understood that the present invention also bears on a windshield wiper having an oscillating arm and a frame constructed as one part.

In an embodiment of a windshield wiper according to the invention the auxiliary fixation means comprise at least one hole in the frame and/or arm cooperating with at least one corresponding protrusion on the air deflector.

In a further embodiment of a windshield wiper according to the invention the main fixating means comprise at least one lip on the frame and/or arm cooperating with at least one corresponding groove on the air deflector.

In a further embodiment of a windshield wiper according to the invention the air deflector is fixed to the longitudinal side of the frame. By this an easy adjustment (either a translation and/or a small rotation) of the air deflector in a plane substantially perpendicular to the wiping plane is made possible.

In a further embodiment of a windshield wiper according to the invention the air deflector is fixed to the main yoke of the frame.

The invention furthermore refers to an air deflector comprising sliding means for attachment to a windshield wiper according to the invention, and further comprising either a protrusion for clipping into a hole formed on the frame/arm of the windshield wiper or a hole into which a protrusion formed on the frame/arm of the windshield wiper is adapted to clip.

Finally the invention relates to a process for applying an air deflector on a windshield wiper comprising an oscillating arm, a frame connected thereto for receiving a wiper blade, whereby use is made of main fixation means substantially formed by sliding means for attaching the air deflector to the frame and/or arm, leaving open an adjustment of the air deflector to its final position substantially perpendicular to the wiping plane, and of auxiliary fixation means substantially formed by protrusion/hole means for fixating the air deflector in the said final position.

Further objects and effects of the invention will become apparent from the following detailed description taken in conjunction with the drawings, in which
- figure 1 shows diagrammatically the flow of streams of air along the windscreen of a car;
- figure 2 is a diagram of a standard windscreen wiper in a position parallel to the streams of air;
- figure 3 is a cross-section of the same windscreen wiper, but in a position at right angles to the streams of air;
- figure 4 illustrates the forces due to the tangential streams of air acting on the standard windscreen wiper blade;
- figures 5 and 6 show a side view and a top view of a frame of a windshield wiper with an air deflector according to the invention, respectively;
- figure 7 illustrates several cross-sections of the frame of the windshield wiper of figure 5;
- figure 8 shows several views of a frame of a windshield wiper equipped with an air deflector according to the invention, depicting separated and assembled parts thereof; and
- figure 9 illustrates several side views and a top view of a frame of a windshield wiper with an air deflector mounted thereon according to the invention, whereby several adjustments of the air deflector are shown.

Figure 1 shows a perspective view of the front portion of a car provided with a curved windscreen A, together with the direction of flow of the streams of air, the latter passing round the vehicle upwards and round the sides. In a zone in which a windscreen wiper B of the usual standard form is located parallel to the streams of air, as shown in figure 2, nothing unusual occurs; on the other hand, in a zone such as shown in figure 3, in which the streams of air are practically at right angles to the direction of the windscreen wiper, this air cannot flow along the glass because of the wiper blade, and creates an increase in pressure (indicated by the sign +), which also exists in the region of the hollow profile comprised between the flanges of the frame C directed towards the windscreen. These flanges create further obstacles to the flow of air and assist in maintaining the increased pressure. In addition, the streams of air which pass round the wiper towards the upstream side tend, as is well known, to move away from the surface and to create a reduced pressure zone (indicated by the sign -). These two forces Fx and Fz (which can be compared with the drag and the lift acting on a wing section) have a resultant R which tends to lift the windscreen wiper against the mechanical pressure applied by the arm (see figure 4).

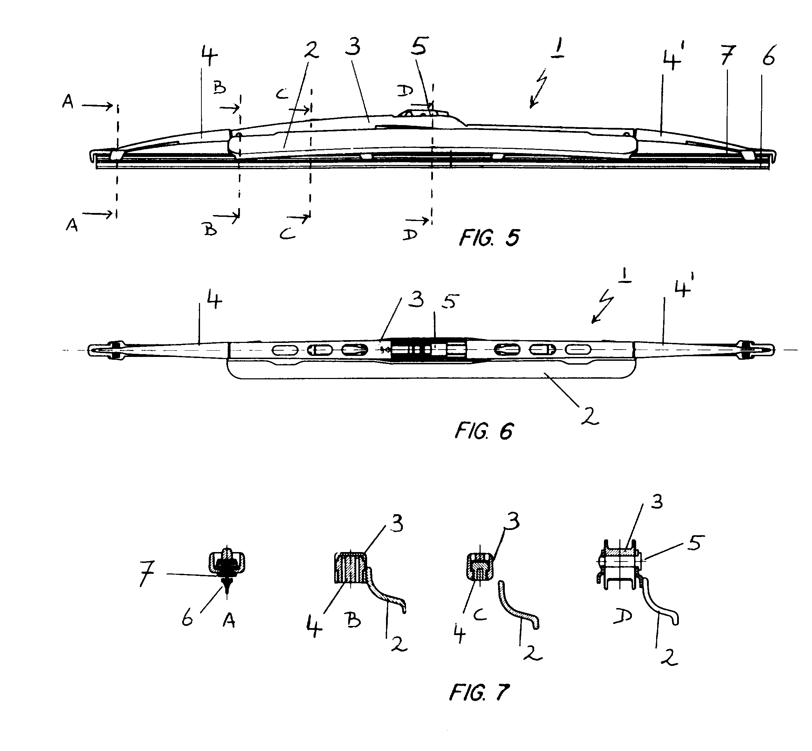

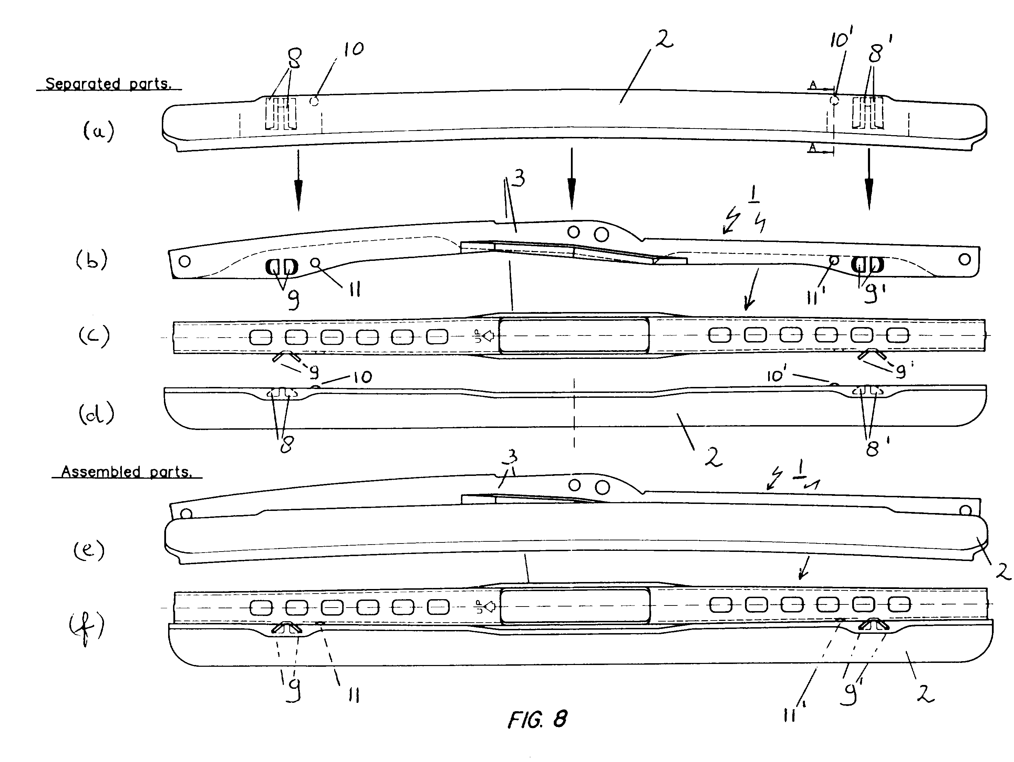

Figure 5 represents a side view of a frame 1 of a windshield wiper with an air deflector (spoiler) 2 mounted thereon according to the invention, which frame 1 comprises a main yoke or bridge 3, two side yokes 4 and 4', a rivet 5 for connecting the frame 1 to an oscillating arm (not shown) of the windshield wiper, as well as a wiping blade 6 reinforced by a flexor 7. A top view of the frame 1 is represented in figure 6, whereas figure 7 illustrates several cross-sections A, B, C and D along the dotted lines A-A, B-B, C-C and D-D of figure 5. In figures 5, 6 and 7 corresponding parts are indicated by the same reference numerals.

Figure 8 illustrates the main yoke 3 of the main frame 1 and the air deflector 2 as separated parts seen from aside (a and b) and from above (c and d), and as assembled parts seen from aside (e) and from above (f). The air deflector 2 is equipped with two pairs of small grooves 8, 8' operating in assembled position with corresponding pairs of lips 9, 9' punched out of the main yoke 3 of the frame 1. Because of the fact that the lips 9, 9' are bent outwardly, no interference is caused with parts in the main yoke 3, like parts of the side yokes 4, 4'. The grooves 8, 8' and the lips 9, 9' together form main fixation means, in this embodiment actually being sliding means, for attaching the air deflector 2 to the main yoke 3, leaving open a slidingly adjustment of the air deflector 2 relative to the wiping plane. This adjustment is a translation parallel to the main yoke 3, whether or not combined with a slight rotation. When the air deflector 2 is in its final (adjusted) position, auxiliary fixation means in the form of two protrusions ("nipples") 10, 10' on the air deflector 2 clip into corresponding holes 11, 11' in the main yoke 3 of the frame 1 in order to fixate the air deflector 2 into this final (desired) position. It is an important aspect of the invention that no supplementary parts like screws, clips and the like are necessary to attach the air deflector 2 to the main yoke 3.

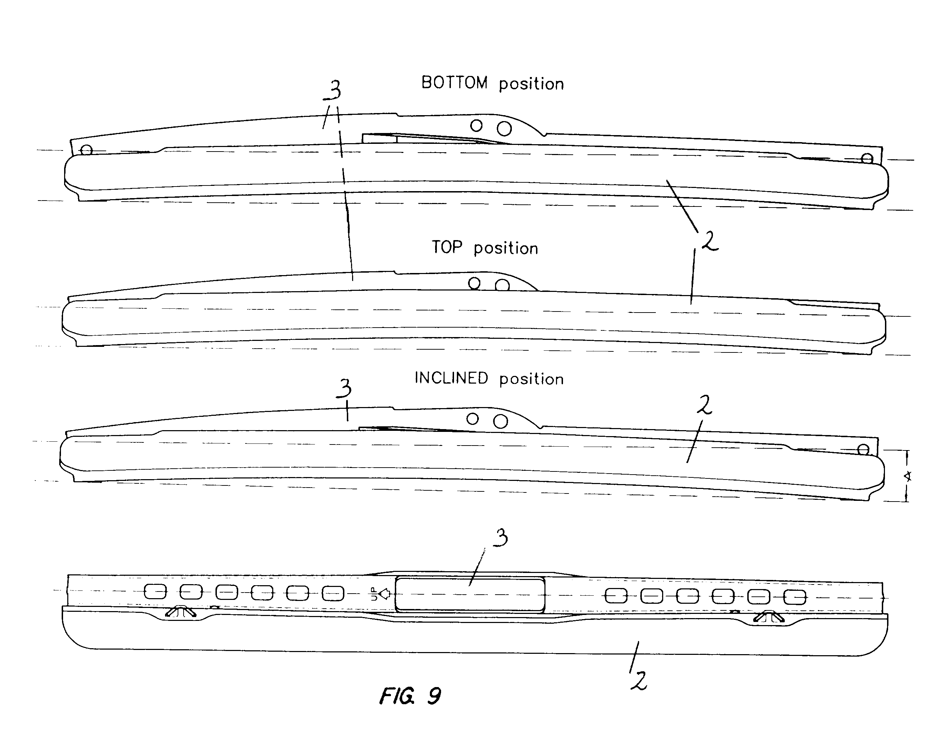

In figure 9 three side views of the frame 1 with the air deflector 2 mounted thereon are shown, whereby the air deflector 2 is illustrated in several adjustment positions, indicated as bottom position, top position (all translational movements) and inclined position (being a rotational movement). Further figure 9 represents a top view of the frame and the air deflector 2 as assembled. The air deflector 2 might have reinforcements at the location of the grooves 8, 8' and the protrusions 10, 10'.

The present invention makes it possible to mount air deflectors 2, mutually only differing in the sense that only the position (in the longitudinal plane of the frame 1, being substantially perpendicular to the wiping plane) of the protrusions 10, 10' thereon is modified by using inserts in the respective mould, on frames of windshield wipers to be used for all kinds of cars, without there being any necessity to modify these frames.

## Claims

1. Windshield wiper comprising an oscillating arm, a frame (1) connected thereto for receiving a wiper blade (6), as well as comprising an air deflector (2), wherein the wiper is provided with main fixation means (8, 8'; 9, 9') substantially formed by sliding means for attaching the air deflector (2) to the frame (1) and/or arm, leaving open an adjustment of the air deflector (2) to its final position substantially perpendicular to the sniping plane, and with auxiliary fixation means (10, 10'; 11, 11') for fixating the air deflector (2) in the said final position, characterized in that the auxiliary fixation means (10, 10'; 11, 11') are formed either by a protrusion on the air deflector (2) and a hole on the frame (1)/arm or by a hole on the air deflector (2) and a protrusion on the frame (1)/arm.

2. Windshield wiper according to claim 1, whereby the auxiliary fixation means (10, 10'; 11, 11') comprise at least one hole (11, 11') in the frame (1) and/or arm cooperating with at least one corresponding protrusion (10, 10') on the air deflector (2).

3. Windshield wiper according to claim 1 or 2, whereby the main fixation means (8, 8'; 9, 9')comprise at least one lip (9, 9') on the frame (1) and/or arm cooperating with at least one corresponding groove (8, 8') on the air deflector (2).

4. Windshield wiper according to claim 1, 2 or 3, whereby the air deflector (2) is fixed to the longitudinal side of the frame (1).

5. Windshield wiper according to any one of the preceding claims 1-4, whereby the air deflector (2) is fixed to the main yoke (3) of the frame (1).

6. Air deflector (2) comprising sliding means for attachment to a windshield wiper according to any of the preceding claims 1 to 5, and further comprising either a protrusion for clipping into a hole formed on the frame (1)/arm of the windshield wiper or a hole into which a protrusion formed on the frame (1)/arm of the windshield wiper is adapted to clip.

7. Process for applying an air deflector (2) on a windshield wiper according to any one of the preceding claims 1-5, comprising an oscillating arm, a frame (1) connected thereto for receiving a wiper blade (6), whereby use is made of main fixation means (8,8';9,9') substantially formed by sliding means for attaching the air deflector (2) to the frame (1) and/or arm, leaving open an adjustment of the air deflector (2) to its final position substantially perpendicular to the wiping plane, and of auxiliary fixation means (10,10';11,11') substantially formed by protrusion/hole means for fixating the air deflector (2) in the said final position.

## Patentansprüche

1. Scheibenwischer, der einen schwingenden Arm, einen damit verbundenen Bügel (1), der ein Wischerblatt (6) aufnimmt, sowie eine Luftablenkvorrichtung (2) umfaßt, wobei der Wischer mit einer Hauptfixiereinrichtung (8, 8'; 9, 9') versehen ist, die im wesentlichen durch eine Gleiteinrichtung zum Anbringen der Luftablenkvorrichtung (2) an dem Bügel (1) und/oder Arm gebildet wird, wobei die Einstellung der Luftablenkvorrichtung (2) in ihre abschließende Position im wesentlichen senkrecht zu der Wischebene möglich bleibt, sowie mit einer zusätzlichen Fixiereinrichtung (10, 10'; 11, 11'), mit der die Luftablenkvorrichtung (2) in der abschließenden Position fixiert wird, **dadurch gekennzeichnet**, daß die zusätzliche Fixiereinrichtung (10, 10'; 11, 11') entweder durch einen Vorsprung an der Luftablenkvorrichtung (2) und ein Loch an dem Bügel (1) /Arm oder durch ein Loch an der Luftablenkvorrichtung (2) und einen Vorsprung an dem Bügel (1) /Arm gebildet wird.

2. Scheibenwischer nach Anspruch 1, wobei die zusätzliche Fixiereinrichtung (10, 10'; 11, 11') wenigstens ein Loch (11, 11') in dem Bügel (1) und/oder Arm umfaßt, das mit wenigstens einem entsprechenden Vorsprung (10, 10') an der Luftablenkvorrichtung zusammenwirkt.

3. Scheibenwischer nach Anspruch 1 oder 2, wobei die Hauptfixiereinrichtung (8, 8'; 9, 9') wenigstens eine Nase (9, 9') an dem Bügel (1) und/oder Arm umfaßt, die mit wenigstens einer Nut (8, 8') an der Luftablenkvorrichtung (2) zusammenwirkt.

4. Scheibenwischer nach Anspruch 1, 2 oder 3, wobei die Luftablenkvorrichtung (2) an der Längsseite des Bügels (1) befestigt ist.

5. Scheibenwischer nach einem der vorangehenden Ansprüche 1-4, wobei die Luftablenkvorrichtung (2) am Hauptjoch (3) des Bügels (1) befestigt ist.

6. Luftablenkvorrichtung (2), die eine Gleiteinrichtung zum Anbringen an einem Scheibenwischer nach einem der Ansprüche 1-5 umfaßt, und die des weiteren entweder einen Vorsprung zum Festklemmen in einem Loch umfaßt, das an dem Bügel (1) /Arm des Scheibenwischers ausgebildet ist, oder ein Loch, in das ein Vorsprung, der an dem Bügel (1) /Arm des Scheibenwischers ausgebildet ist, geklemmt wird.

7. Vorgang zum Anbringen einer Luftablenkvorrichtung (2) an einem Scheibenwischer nach einem der vorangehenden Ansprüche 1-5, der einen schwingenden Arm, einen damit verbundenen Bügel (1) zum Aufnehmen eines Wischerblattes (6) umfaßt, wobei eine Hauptfixiereinrichtung (8, 8'; 9, 9') genutzt wird, die im wesentlichen durch eine Gleiteinrichtung gebildet wird, um die Luftablenkvorrichtung (2) an dem Bügel (1) und/oder Arm anzubringen, wobei Einstellung der Luftablenkvorrichtung (2) in ihre abschließende Position im wesentlichen senkrecht zu der Wischebene möglich bleibt, sowie eine zusätzliche Fixiereinrichtung (10, 10'; 11, 11'), die im wesentlichen durch eine Vorsprungs/Loch-Einrichtung gebildet wird, um die Luftablenkvorrichtung (2) in der abschließenden Position zu fixieren.

## Revendications

1. Essuie-glace de pare-brise, comprenant un bras oscillant, une monture (1) reliée au bras et destinée à recevoir une lame d'essuyage (6), comprenant aussi un déflecteur d'air (2), dans lequel l'essuie-glace est muni de moyens de fixation principaux (8, 8'; 9, 9') sensiblement formés de moyens coulissant pour fixer le déflecteur d'air (2) sur la monture (1) et/ou le bras, permettant un réglage du déflecteur d'air (2) dans sa position finale sensiblement perpendiculairement au plan de l'essuyage, et ayant des moyens de fixation auxiliaires (10, 10' ; 11,11') pour fixer le déflecteur d'air (2) dans ladite position finale, caractérisé en ce que les moyens de fixation auxiliaires (10, 10' ; 11, 11') sont formés soit par une protubérance située sur le déflecteur d'air (2) et par un trou situé sur la monture (1) et/ou le bras, soit par un trou situé sur le déflecteur d'air (2) et par une protubérance située sur la monture (1) et/ou le bras.

2. Essuie-glace de pare-brise selon la revendication 1, dans lequel les moyens de fixation auxiliaires (10, 10'; 11, 11') comprennent au moins un trou (11, 11') dans la monture (1) et/ou le bras coopérant avec au moins une protubérance correspondante (10, 10') située sur le déflecteur d'air (2).

3. Essuie-glace de pare-brise selon la revendication 1 ou 2, dans lequel les moyens de fixation principaux (8, 8' ; 9, 9') comprennent au moins une lèvre (9, 9') située sur la monture (1) et/ou le bras coopérant avec au moins une rainure correspondante (8, 8') située sur le déflecteur d'air (2).

4. Essuie-glace de pare-brise selon la revendication 1, 2 ou 3, dans lequel le déflecteur d'air (2) est fixé au côté longitudinal de la monture (1).

5. Essuie-glace de pare-brise selon l'une quelconque des revendications précédentes, dans lequel le déflecteur d'air (2) est fixé sur l'arceau principal (3) de la monture (1).

6. Déflecteur d'air (2) comprenant des moyens coulissants de fixation sur un essuie-glace de pare-brise selon l'une quelconque des revendications précédentes 1 à 5, et comprenant en outre soit une protubérance destinée à s'enclencher dans un trou formé sur la monture (1) et/ou le bras de l'essuie-glace de pare-brise, soit un trou dans lequel une protubérance formée sur la monture (1) et/ou le bras de l'essuie-glace de pare-brise est adaptée pour s'enclencher.

7. Procédé pour installer un déflecteur d'air (2) sur un essuie-glace de pare-brise selon l'une quelconque des revendications précédentes 1 à 5 comprenant un bras oscillant, une monture (1) reliée au bras et destinée à recevoir une lame d'essuyage (6), dans lequel il est fait usage de moyens de fixation principaux (8, 8' ; 9, 9') sensiblement formés de moyens coulissant pour fixer le déflecteur d'air (2) sur la monture (1) et/ou le bras, permettant un réglage du déflecteur d'air (2) dans sa position finale sensiblement perpendiculairement au plan de l'essuyage, et de moyens de fixation auxiliaires (10, 10' ; 11, 11') sensiblement formés de moyens de type protubérance-trou pour fixer le déflecteur d'air (2) dans ladite position finale.
